# EUROPÄISCHE PATENTSCHRIFT

(11) **EP 2 817 683 B1**
(45) Veröffentlichungstag und Bekanntmachung des Hinweises auf die Patenterteilung: **25.10.2017**
(21) Anmeldenummer: 13712477.2
(22) Anmeldetag: 18.02.2013
(51) Int. Cl.: G05B 19/042

(54) **VERFAHREN ZUR STEUERUNG EINER FLUCHTWEGMARKIERUNGS-BELEUCHTUNG UND/ODER EINER NOTFALLBELEUCHTUNG**
METHOD FOR CONTROLLING AN ESCAPE WAY LIGHTING AND/OR AN EMERGENCY LIGHTING
PROCEDE DE COMMANDE D'UN ECLAIRAGE D'UN CHEMIN DE FUITE ET/OU D'UN ECLAIRAGE D'URGENCE

(30) Priorität: 21.02.2012 DE 102012003272; 13.06.2012 DE 102012011600
(43) Veröffentlichungstag der Anmeldung: 31.12.2014
(73) Patentinhaber: Phoenix Contact GmbH & Co. KG, 32825 Blomberg (DE)
(72) Erfinder: POLLMANN, Werner, 37671 Höxter (DE)
(74) Vertreter: Bringemeier, Ulrich Heinz
(86) Internationale Anmeldenummer: PCT/EP2013/000476
(87) Internationale Veröffentlichungsnummer: WO 2013/124050

(56) Entgegenhaltungen:
- WO-A1-2006/042779
- DE-A1- 19 929 645
- DE-A1-102006 047 026
- DE-A1-102007 061 754
- KR-A- 20100 115 959

## Beschreibung

Die Erfindung betrifft ein Verfahren zur Steuerung einer Fluchtwegmarkierungs-Beleuchtung und/oder einer Notfallbeleuchtung in einem von Fahrzeugen befahrenen Tunnel unter Verwendung eines Systems, das aus mindestens zwei Steuerungseinheiten, nämlich einer ersten Steuerungseinheit und einer zweiten Steuerungseinheit, mindestens einem Aktor und mindestens einem Sensor besteht. Dabei erzeugen die Steuerungseinheiten anhand der Information des mindestens einen Sensors Steuerungsdaten für den mindestens einen Aktor.

In vielen Systemen, bei denen eine hohe Verfügbarkeit und Ausfallsicherheit benötigt wird, z.B. bei Automatisierungssystemen der Produktionstechnik (z.B. in der Pharmaindustrie, der chemischen Industrie, der Automobilindustrie oder der Kraftwerksindustrie) oder in automatisierten Tunnelbeleuchtungssystemen, wird die Automatisierungstechnik redundant ausgeführt. Wenn ein Teil der Automatisierungstechnik ausfällt, so kann ein funktionsgleicher Teil, der doppelt vorhanden ist, die ausgefallene Funktion übernehmen, wodurch die Funktionstüchtigkeit des Systems sichergestellt wird.

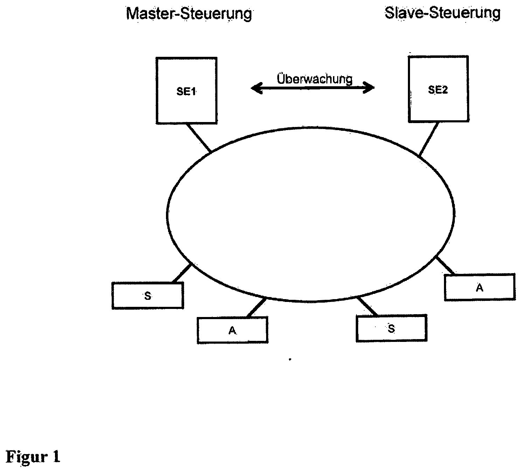

Ein solches System ist in der Regel wie folgt aufgebaut (siehe Figur 1):
An einer zentralen Steuerungseinheit ist ein redundantes, hochverfügbares Kommunikationsnetzwerk angeschlossen, das wiederum die Verbindung zu den Ein- und Ausgabeeinheiten (Sensoren / Aktoren) des Systems darstellt. Typischer Weise ist von der Steuerung bis zur Kommunikationsebene alles redundant ausgeführt, während die Sensor/ Aktorebene häufig nicht redundant ausgeführt ist. Die Redundanz hinsichtlich der Steuerung wird realisiert, indem eine erste Steuerungseinheit als Master-Steuerung die Steuerung des Systems übernimmt, während eine zweite Steuerungseinheit als Slavesteuerung auf den Ausfall der Mastersteuerung wartet. Hierzu findet ein ständiger Abgleich zwischen den beiden Steuerungseinheiten über eine Kommunikationsverbindung statt. Die Steuerung (Master/Slave) kommuniziert dann über einen Kommunikationsweg mit der Sensor / Aktorebene. Die Sensoren liefern entweder an den Master oder an beide Steuerungen die Daten. Die Aktoren werden von der Mastersteuerung angesprochen und mit Daten versorgt. Fällt die Mastersteuerung aus, übernimmt die Slavesteuerung die Kommunikation mit den Sensoren und Aktoren, wobei die Sensor / Aktorebene hiervon nichts merkt. Die Aktoren haben keinen Einfluss darauf, woher die Steuerungsdaten kommen.

Aus den Dokumenten DE 10 2005 027 666 B3 und WO 91/08535 A1 sind System-Steuerungsverfahren unter Verwendung von miteinander kommunizierenden Master- und Slavesteuerungen bekannt.

Dabei ist die Etablierung einer Kommunikation zwischen Mastersteuerung und Slavesteuerung zur Realisierung einer Redundanz auf Steuerungsebene in manchen Fällen mit besonderem Aufwand und Kosten verbunden.

Aus den Dokumenten WO 2006/042779A1 und DE 10 2006 047 026 A1 ist jeweils ein redundantes Steuerungssystem mit zwei Steuerungseinheiten sowie mit mindestens einem Aktor und mindestens einem Sensor bekannt, wobei die Steuerungseinheiten anhand der Information des Sensors Steuerungsdaten für den Aktor erzeugen und wobei der Aktor die Steuerungsdaten sowohl der ersten Steuerungseinheit als auch die Steuerungsdaten der zweiten Steuerungseinheit empfängt, und wobei der Aktor derart ausgebildet ist, dass dieser selbst darüber entscheidet, ob er für die Ausführung seiner Aktorfunktion die Steuerungsdaten der ersten oder zweiten Steuerungseinheit verwendet.

Aus den Dokumenten DE 199 29 645 A1, DE 10 2007 061 754 A1 und DE 196 44 126 A1 sind Systeme zur Ansteuerung einer Fluchtwegmarkierungs-Beleuchtung bekannt.

Aufgabe der Erfindung ist es, ein Verfahren zur Steuerung einer Fluchtwegmarkierungs-Beleuchtung und/oder einer Notfallbeleuchtung anzugeben, dass in einfacher und zuverlässiger Weise eine hohe Verfügbarkeit und Ausfallsicherheit bietet.

Diese Aufgabe wird durch die Merkmale des Patentanspruchs 1 gelöst. Die sich daran anschließenden abhängigen Patentansprüche beziehen sich auf vorteilhafte Ausführungsformen.

Das erfindungsgemäße Verfahren betrifft eine Steuerung einer Fluchtwegmarkierungs-Beleuchtung und/oder einer Notfallbeleuchtung in einem von Fahrzeugen befahrenen Tunnel unter Verwendung eines Systems bestehend aus mindestens zwei Steuerungseinheiten, nämlich einer ersten Steuerungseinheit und einer zweiten Steuerungseinheit, mindestens einem Aktor und mindestens einem Sensor. Dabei erzeugen die Steuerungseinheiten anhand der Information des Sensors Steuerungsdaten für den Aktor, wobei der Aktor die Steuerungsdaten sowohl der ersten Steuerungseinheit als auch die Steuerungsdaten der zweiten Steuerungseinheit empfängt. Dabei ist der Aktor derart ausgebildet, dass dieser selbst darüber entscheidet, ob er für die Ausführung seiner Aktorfunktion die Steuerungsdaten der ersten oder zweiten Steuerungseinheit verwendet.

Der mindestens eine Aktor ist zum Ein-und Ausschalten der Fluchtwegmarkierungs-Beleuchtung und/oder der Notfallbeleuchtung oder zum Ein-und Ausschalten von Teilen der Fluchtwegmarkierungs-Beleuchtung und/oder von Teilen der Notfallbeleuchtung ausgebildet.

Der mindestens eine Sensor ist zur Detektion der Position und/oder der Bewegung von Fahrzeugen oder zur Detektion von Rauch und/oder Feuer ausgebildet ist.

Dabei ist die erste Steuerungseinheit im Bereich der Tunneleinfahrt und die zweite Steuerungseinheit im Bereich der Tunnelausfahrt angeordnet.

Es findet also eine Kommunikation zwischen dem Aktor und beiden Steuerungseinheiten statt. Eine Kommunikation zwischen den beiden Steuerungseinheiten ist nicht notwendig. Dementsprechend kann eine aufwendige und teuere Kommunikationsverbindung per Kabel oder per Funk zwischen den beiden Steuerungseinheiten entfallen. Dies ist dann von besonderem Vorteil, wenn die beiden Steuerungseinheiten räumlich weit voneinander entfernt sind. Die beiden Steuerungseinheiten sind gleichwertig.

Ein weiterer Vorteil besteht darin, dass die Umschaltzeiten sich verringern, da ein Aktor bereits innerhalb eines Kommunikationszyklusses in einem Kommunikationsnetzwerk merkt, ob eine Steuerungseinheit vorhanden ist oder nicht. Ein entsprechender Abgleich zwischen einer Mastersteuerung und einer Slavesteuerung dauert typischer Weise erheblich länger. Die Steuerungseinheiten müssen sich nicht untereinander abgleichen, wodurch die Steuerungssoftware erheblich einfacher ist.

Ferner ist das Ab- und Hinzuschalten von Aktoren, z.B. im Energiemanagement- oder Servicefall, einfach möglich, ohne dass die Steuerungseinheiten hiervon Kenntnis haben müssen.

Die Steuerungseinheiten benötigen keine Information darüber, an welcher Stelle eine Unterbrechung im System stattgefunden hat. Die Steuerungseinheiten müssen auch nicht softwaretechnisch darauf eingestellt werden.

Ein weiterer Vorteil liegt in dem Kommunikationsnetzwerk. Das Kommunikationsnetzwerk kann in unterschiedlichen Varianten aufgebaut werden ohne die Qualität des Redundanzverhaltens zu beeinträchtigen. Besonders bei räumlich getrennten Steuerungseinheiten ist dies ein entscheidender Vorteil.

In einer ersten Ausführungsform weist der Aktor ein Selektionsmittel auf, über das der Aktor automatisch auswählt, ob die Steuerungsdaten der ersten oder der zweiten Steuerungseinheit für die Ausführung der Aktorfunktion verwendet werden. Als Selektionsmittel kann ein manuell betätigbarer Auswahlschalter, beispielsweise eine sogenannter DIP-Schalter, am Aktor verwendet werden.

In einer zweiten Ausführungsform wird als Selektionsmittel ein Selektionskriterium in Steuerprogramm der Steuerungselektronik des Aktors verwendet.

Wenn die erste Steuerungseinheit ausfällt und von dieser keine Steuerungsdaten mehr empfangen werden, wählt der Aktor automatisch die Steuerungsdaten der zweiten Steuerungseinheit für die Ausführung der Aktorfunktion aus und vice versa.

In einer vorteilhaften Ausführungsform sendet der mindestens eine Aktor ein Synchronisationssignal an die beiden Steuerungseinheiten, woraufhin die beiden Steuerungseinheiten die Information des mindestens einen Sensors abfragen und anhand der aktualisierten Sensorinformationen entsprechende Steuerungsdaten an den Aktor senden. Auf diese Weise wird sichergestellt, dass die beiden Steuerungseinheiten jeweils die aktuellsten Sensordaten für die Ansteuerung der Aktoren verwenden.

Für den Datenaustausch zwischen den beiden Steuerungseinheiten und dem mindestens einen Aktor wird ein Kommunikationsnetzwerk, vorzugsweise ein Bussystem, verwendet.

Dabei erfolgt der Datenaustausch der beiden Steuerungseinheiten mit dem jeweils mindestens einen Sensor über dasselbe Kommunikationsnetzwerk, über das auch die Kommunikation mit dem mindestens einen Aktor erfolgt.

Anhand der beigefügten Zeichnungen soll die Erfindung nachfolgend näher erläutert werden. Dabei zeigt:
- Figur 1: ein redundantes System mit einer Mastersteuerung und einer Slavesteuerung nach dem Stand der Technik,
- Figur 2: das Umschalten von der Mastersteuerung auf die Slavesteuerung bei Ausfall der Mastersteuerung,
- Figur 3A-3E: verschiedene Varianten zum Aufbau des Kommunikationsnetzwerkes,
- Figur 4: ein System zur Steuerung einer Fluchtwegmarkierungs-Beleuchtung und/oder einer Notfallbeleuchtung in einem Fahrzeugtunnel,
- Figur 5: die verschiedenen als Schalter ausgebildeten Aktoren zum Ein-und Ausschalten von einzelnen Teilen der Fluchtwegmarkierungs-Beleuchtung.

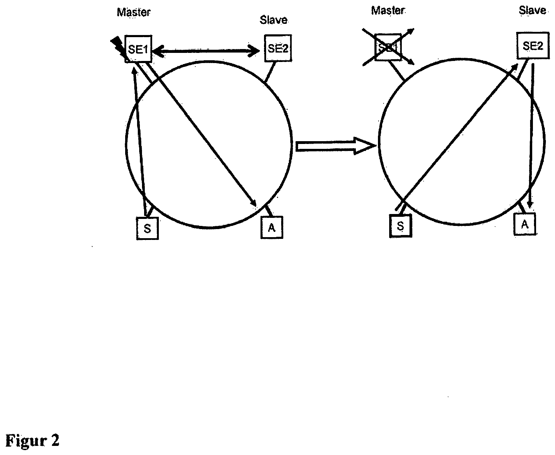

Figur 1 zeigt ein System nach dem Stand der Technik mit zwei Steuerungseinheiten (SE1, SE2) bei denen die erste Steuerungseinheit (SE1) als Mastersteuerung und die zweite Steuerungseinheit (SE2) als Slavesteuerung ausgebildet ist. Die beiden Steuerungseinheiten (SE1, SE2) sind über ein ringförmiges Kommunikationsnetzwerk mit Sensoren (S) und Aktoren (A) verbunden. Dabei erzeugt die Mastersteuerung anhand der Information der Sensoren (S) die Steuerungsdaten für die Aktoren (A). Mastersteuerung und Slavesteuerung überwachen sich, so dass bei Ausfall der Mastersteuerung die Systemsteuerung von der Slavesteuerung übernommen wird (siehe Figur 2).

Erfindungsgemäß sind zwei gleichwertige Steuerungseinheiten (SE1) und (SE2) vorgesehen, die miteinander nicht kommunizieren müssen. Dabei empfängt der mindestens eine Aktor (A) bzw. die Aktoren (A) die Steuerungsdaten sowohl der ersten Steuerungseinheiten (SE1) als auch die Steuerungsdaten der zweiten Steuerungseinheit (SE2). Die Systemverfügbarkeit bei Ausfall einer Steuerungseinheit wird erfindungsgemäß durch den Einsatz von intelligenten Aktoren (A) realisiert, wobei jeder Aktor (A) derart ausgebildet ist, dass dieser selbst darüber entscheidet, ob er für die Ausführung seiner Aktorfunktion die Steuerungsdaten der ersten oder zweiten Steuerungseinheit (SE1, SE2) verwendet.

Das Kommunikationsnetzwerk kann in unterschiedlichen Varianten aufgebaut werden, ohne dass die Qualität des Redundanzverhaltens beeinträchtigt wird. Besonders bei räumlich getrennten Steuerungseinheiten (SE1, SE2) ist dies ein entscheidender Vorteil.

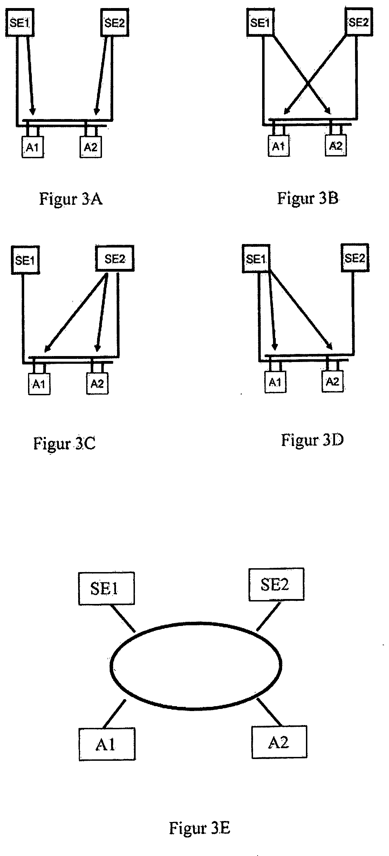

Mögliche verschiedene Aufbauvarianten für ein erfindungsgemäßes Kommunikationsnetzwerk sind in den Figuren 3A bis 3D dargestellt. In den Figuren ist zur Vereinfachung ein System mit nur 2 Aktoren (A1, A2) dargestellt. Der mindestens eine Sensor bzw. die Sensoren sind in diesen Figuren nicht dargestellt. Jede der beiden Steuerungseinheiten (SE1, SE2) ist über einen Kommunikationskanal mit allen Aktoren (A1, A2) verbunden. Gemäß Figur 3A hat der Aktor (A1) standardmäßig die Steuerungseinheit (SE1) als Lieferanten für die Steuerungsdaten zur Ausführung seiner Aktorfunktion selektiert, während der Aktor (A2) standardmäßig die Steuerungseinheit (SE2) als Lieferanten für die Steuerungsdaten zur Ausführung seiner Aktorfunktion selektiert hat. Gemäß Figur 3B hat der Aktor (A1) standardmäßig die Steuerungseinheit (SE2) als Lieferanten für die Steuerungsdaten zur Ausführung seiner Aktorfunktion selektiert, während der Aktor (A2) standardmäßig die Steuerungseinheit (SE1) als Lieferanten für die Steuerungsdaten zur Ausführung seiner Aktorfunktion selektiert hat. Gemäß Figur 3C haben beide Aktoren (A1, A2) standardmäßig die Steuerungseinheit (SE2) als Lieferanten für die Steuerungsdaten zur Ausführung ihrer jeweiligen Aktorfunktion selektiert, gemäß Figur 3D haben beide Aktoren (A1, A2) standardmäßig die Steuerungseinheit (SE1) selektiert.

Bei Ausfall einer Steuerungseinheit (SE1, SE2) schalten die Aktoren (A1, A2) automatisch auf die jeweils andere Steuerungseinheit um.

Wenn die erste Steuerungseinheit (SE1) ausfällt und von dieser keine Steuerungsdaten mehr empfangen werden, wählen die Aktoren (A1, A2) automatisch die Steuerungsdaten der zweiten Steuerungseinheit (SE2) für die Ausführung ihrer jeweiligen Aktorfunktion aus und vice versa.

Figur 3E zeigt ein ringförmig aufgebautes Kommunikationsnetzwerk.

Bei dem erfindungsgsgemäßen Aktor (A) handelt es sich um ein ein- und abschaltbares Beleuchtungsmittel.

Bei dem erfindungsgemäßen Sensor (S) kann es sich bspw. um eine Lichtschranke, einen Ultraschallsensor oder einen Rauchmelder handeln.

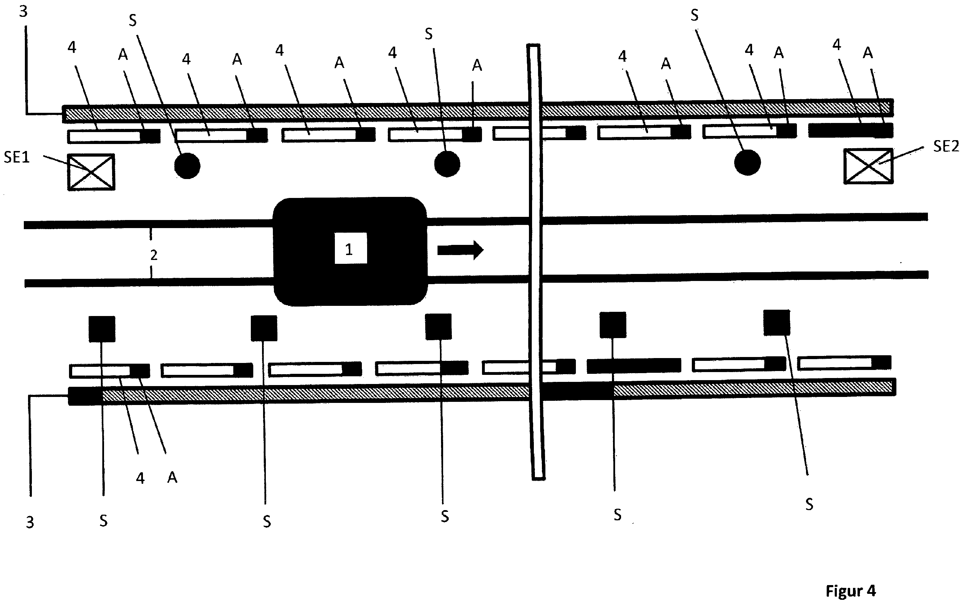

In Figur 4 ist schematisch ein System zur Steuerung einer Fluchtwegmarkierungs-Beleuchtung (4) und/oder einer Notfallbeleuchtung in einem von Fahrzeugen befahrenen Tunnel dargestellt. Die seitlichen Tunnelbegrenzungen sind durch die Tunnelwände (3) angedeutet. Innerhalb des Tunnels befinden sich Schienen (2) auf denen schienengebundene Fahrzeuge/Züge (1) den Tunnel passieren. In Längsrichtung des Tunnels sind nun in bestimmten Abständen eine Vielzahl von Sensoren (S) angeordnet. Diese Sensoren (S) sind zur Detektion der Position und/oder der Bewegung von Fahrzeugen (1) oder zur Detektion von Rauch und/oder Feuer ausgebildet. Die Anzahl und die Abstände der Sensoren untereinander richtet sich nach der Tunnellänge und der Länge der durch den Tunnel fahrenden Fahrzeuge (1). Die erste Sorte von Sensoren (S), die zur Detektion der Position und/oder der Bewegung von Fahrzeugen (1) ausgebildet ist, ist in Figur 4 durch ein quadratisches Symbol gekennzeichnet. Die zweite Sorte von Sensoren (S), die zur Detektion von Rauch und/oder Feuer ausgebildet ist, ist in Figur 4 durch ein kreisrundes Symbol gekennzeichnet. Für die konkrete technische Ausgestaltung dieser Sensoren (S) kann der Fachmann auf die ihm geläufigen Positions-, Bewegungs- Rauch- bzw. Feuersensoren zurückgreifen. Jeder dieser Sensoren steht mit 2 Steuerungseinheiten (SE1, SE2) in Verbindung und sendet seine Sensorinformationen an diese. Aus Sicherheitsgründen sind die beiden Steuerungseinheiten (SE1, SE2) innerhalb des Tunnels möglichst weit voneinander beabstandet, so dass bspw. bei einem Brand oder bei einer mechanischen Einwirkung nicht beide Steuerungseinheiten beschädigt werden. Dabei ist die erste Steuerungseinheit (SE1) im Bereich der Tunneleinfahrt und die zweite Steuerungseinheit (SE2) im Bereich der Tunnelausfahrt angeordnet.

Das Liegenbleiben eines Fahrzeugs (1) innerhalb eines Tunnels stellt eine Notfallsituation dar. Falls ein Fahrzeug (1) im Tunnel liegen bleibt, d.h. sich nicht mehr bewegt, wird dies über die Sensoren (S) detektiert. Die Steuerungseinheiten (SE1, SE2) können anhand der Sensorinformationen feststellen, ob ein Fahrzeug im Tunnel liegengeblieben ist. In einer bevorzugten Ausführungsform können die Steuerungseinheiten (SE1, SE2) anhand der Sensorinformationen auch noch ermitteln, in welchem Streckenabschnitt das Fahrzeug (1) liegengeblieben ist. In einer solchen Notfallsituation hat eine sichere Evakuierung der Fahrzeuginsassen aus dem Tunnel höchste Priorität. Um den Fahrzeuginsassen das Verlassen des Tunnels zu ermöglichen und zu erleichtern, ist innerhalb des Tunnels eine Fluchtwegmarkierungs-Beleuchtung (4) und/oder eine Notfallbeleuchtung vorgesehen, die über die Steuerungseinheiten (SE1, SE2) eingeschaltet wird, wenn - wie vorstehend beschrieben-, eine Notfallsituation detektiert wird. Im einfachsten Fall ist in dem Tunnel eine einzige Fluchtwegmarkierungs-Beleuchtung (4) bzw. Notfallbeleuchtung vorgesehen, die über einen als Schalter ausgebildeten Aktor (A) ein-und ausgeschaltet wird. Dieser Aktor (A) ist nun wiederum mit beiden Steuerungseinheiten (SE1, SE2) verbunden und empfängt von beiden Steuerungseinheiten (SE1, SE2) die Steuerungsdaten zur Ausführung seiner Aktorfunktion (Ein- und Ausschalten der Fluchtwegmakierungs- bzw. Notfallbeleuchtung). Dabei ist dieser Aktor (A) erfindungsgemäß derart ausgebildet, dass dieser selbst darüber entscheidet, ob er für die Ausführung seiner Aktorfunktion die Steuerungsdaten der ersten oder zweiten Steuerungseinheit verwendet. Somit wird eine Redundanz hinsichtlich des Empfangs der Steuerungsdaten geschaffen, ohne dass die beiden Steuerungseinheiten (SE1, SE2) miteinander per Kabel oder Funk Verbunden sein müssen. Da eine Verbindung der beiden, räumlich weit voneinander entfernten Steuerungseinheiten (SE1, SE2) in einem Tunnel sehr aufwendig und kostenintensiv ist, ist das erfindungsgemäße Verfahren mit der speziellen Ausgestaltung der Aktoren (A) in diesem Anwendungsfall besonders vorteilhaft.

Wie in Figur 4 dargestellt, besteht die Fluchtwegmarkierungs-Beleuchtung (4) nicht aus einer einzigen Beleuchtungseinrichtung, sondern aus einer Vielzahl von in Tunnellängsrichtung zu beiden Tunnelseiten angeordneten Teilen, wobei jeder Teil beispielsweise als sogenanntes Lichtband (4) ausgebildet ist. Jedem Lichtband (4) ist dabei ein eigener Aktor (A) zugeordnet. Die Anzahl und die Abstände der Lichtbänder (4) zueinander sind dabei je nach Tunnel unterschiedlich. Die Lichtbänder ihrerseits bestehen vorzugsweise wiederum aus mehreren schaltbaren Beleuchtungssegmenten, wobei durch selektives Ein- und Ausschalten der einzelnen Segmente ein richtungsabhängiges Lauflicht erzeugt werden kann. Zur Beleuchtung der einzelnen Segmente werden bevorzugt Leuchtdioden verwendet. Das richtungsabhängige Lauflicht markiert den Fahrzeuginsassen den Fluchtweg zum nächstgelegenen Tunnelausgang bzw. Notausgang. Das Bezugszeichen 4 wird sowohl für die Fluchtwegmarkierungs-Beleuchtung insgesamt als auch - wenn vorhanden - für deren Teile verwandt.

Es ist in einer Ausführungsform vorgesehen, dass jedem Lichtband (4) als Teil der Fluchtwegmarkierungs-Beleuchtung (4) ein eigener erfindungsgemäßer Aktor (A) zum Ein-und Ausschalten des Lichtbandes zugeordnet ist, wobei jeder dieser Aktoren (A) mit den beiden Steuerungseinheiten (SE1, SE2) verbunden ist.

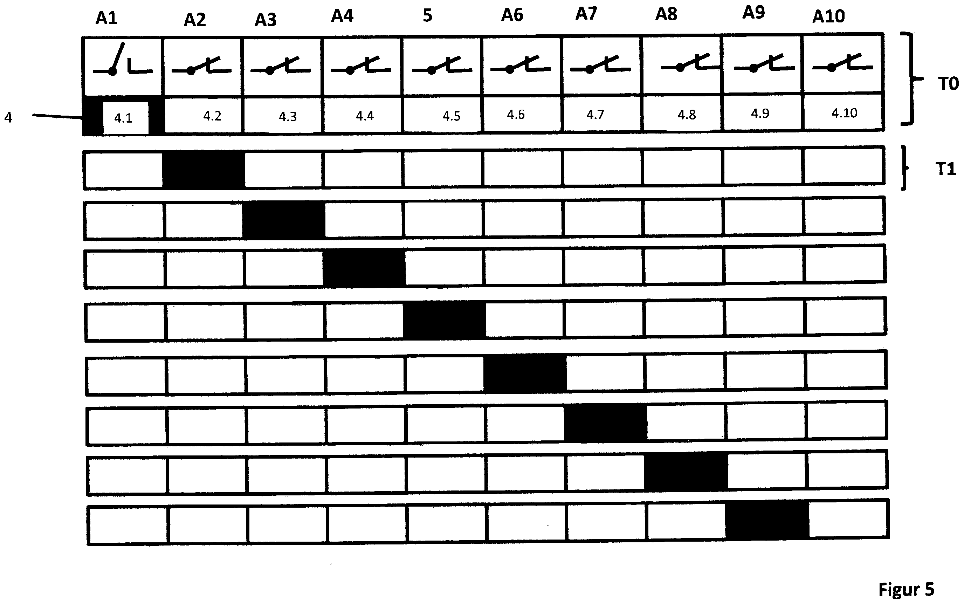

In einer weiteren Ausführungsform ist es Vorgesehen, dass jedem Segment eines Lichtbandes ein eigener erfindungsgemäßer Aktor zum Ein-und Ausschalten des jeweiligen Lichtsegmentes vorgesehen ist - siehe Figur 5. Dort ist ein Lichtband bestehend aus 10 Segmenten (4.1, 4.2, ...) dargestellt, wobei jedem Lichtsegment ein separater als Schalter ausgebildeter Aktor (A1, A2, ...) zugeordnet ist. Jeder dieser Aktoren ist wiederum mit beiden Steuerungseinheiten (SE1, SE2) verbunden. Zur Erzeugung eines Lauflichtes werden die einzelnen Lichtsegmente nacheinander ein- bzw. ausgeschaltet. Dies wird in Figur 5 schematisch anhand der Zeitverläufe veranschaulicht.

Je nachdem in welchem Streckenabschnitt das Fahrzeug liegen bleibt, was über die Sensoren (S) detektiert wird, werden einzelne Teile (4) der Fluchtwegmarkierungs-Beleuchtung über die Aktoren (A) gezielt eingeschaltet, um den Fahrzeuginsassen den nächstgelegenen und sichersten Fluchtweg zu einem Tunnelausgang bzw. Notausgang anzuzeigen.

In einer vorteilhaften Ausführungsform werden zur Ansteuerung der Fluchtwegmarkierungs-Beleuchtung (4) auch noch die Informationen von Rauch-und/oder Feuersensoren (S) verwendet. So kann vermieden werden, dass ein Fluchtweg zum nächstgelegenen Tunnelausgang bzw. Notausgang angezeigt wird, der durch eine Rauch- und Brandzone im Tunnel führen würde.

Bei einer Fluchtwegmarkierungs-Beleuchtung (4), die sich über die gesamte Länge des Tunnels erstreckt und aus einer Vielzahl von Teilen (z.B. Lichtbändern) besteht, macht sich eine Nicht-Synchronität der beiden Steuerungseinheiten (SE1, SE2) insbesondere bei der Erzeugung eines Lauflichtes als störend bemerkbar, wenn Aktoren (A) die Daten unterschiedlicher Steuerungseinheiten verwenden oder für den Empfang der Steuerungsdaten eine andere Steuerungseinheit auswählen. Vor diesem Hintergrund ist es besonders vorteilhaft, wenn mindestens einer der Aktoren(A) ein Synchronisationssignal an die beiden Steuerungseinheiten (SE1, SE2) sendet, woraufhin die beiden Steuerungseinheiten die Information der Sensoren abfragen und anhand der aktualisierten Sensorinformation entsprechend synchronisierte Steuerungsdaten an die Aktoren (A) senden.

## Patentansprüche

1. Verfahren zur Steuerung einer Fluchtwegmarkierungs-Beleuchtung (4) und/oder einer Notfallbeleuchtung in einem von Fahrzeugen befahrenen Tunnel unter Verwendung eines Systems bestehend aus
- mindestens zwei Steuerungseinheiten, nämlich einer ersten Steuerungseinheit (SE1) und einer zweiten Steuerungseinheit (SE2),
- mindestens einem Aktor (A),
- mindestens einem Sensor (S),
wobei die Steuerungseinheiten (SE1, SE2) anhand der Information des Sensors (S) Steuerungsdaten für den Aktor (A) erzeugen,
wobei der Aktor (A) die Steuerungsdaten sowohl der ersten Steuerungseinheit (SE1) als auch die Steuerungsdaten der zweiten Steuerungseinheit (SE2) empfängt,
wobei der Aktor (A) derart ausgebildet ist, dass dieser selbst darüber entscheidet, ob er für die Ausführung seiner Aktorfunktion die Steuerungsdaten der ersten oder zweiten Steuerungseinheit (SE1, SE2) verwendet,
**dadurch gekennzeichnet, dass**
a) der mindestens eine Aktor (A)
a₁) zum Ein-und Ausschalten der Fluchtwegmarkierungs-Beleuchtung (4) und/oder der Notfallbeleuchtung
oder
a₂) zum Ein-und Ausschalten von Teilen der Fluchtwegmarkierungs-Beleuchtung (4) und/oder von Teilen der Notfallbeleuchtung
ausgebildet ist,
b) der mindestens eine Sensor (S)
b₁) zur Detektion der Position und/oder der Bewegung von Fahrzeugen (1)
oder
b₂) zur Detektion von Rauch und/oder Feuer
ausgebildet ist,
c) die erste Steuerungseinheit (SE1) im Bereich der Tunneleinfahrt und die zweite Steuerungseinheit (SE2) im Bereich der Tunnelausfahrt angeordnet ist.

2. Verfahren nach Anspruch 1, **dadurch gekennzeichnet, dass**,
wenn die erste Steuerungseinheit (SE1) ausfällt und von dieser keine Steuerungsdaten mehr empfangen werden, der Aktor (A) automatisch die Steuerungsdaten der zweiten Steuerungseinheit (SE2) für die Ausführung der Aktorfunktion auswählt,
wenn die zweite Steuerungseinheit (SE2) ausfällt und von dieser keine Steuerungsdaten mehr empfangen werden, der Aktor (A) automatisch die Steuerungsdaten der ersten Steuerungseinheit (SE1) für die Ausführung der Aktorfunktion auswählt.

3. Verfahren nach einem der vorstehenden Ansprüche,
**dadurch gekennzeichnet, dass**
der Aktor (A) ein Synchronisationssignal an die beiden Steuerungseinheiten (SE1, SE2) sendet, woraufhin die beiden Steuerungseinheiten (SE1, SE2) die Information des mindestens einen Sensors (S) abfragen und anhand der aktualisierten Sensorinformation entsprechende Steuerungsdaten an den Aktor (A) senden.

4. Verfahren nach einem der vorstehenden Ansprüche,
**dadurch gekennzeichnet, dass**
als Fluchtwegmarkierungs-Beleuchtung (4) eine Vielzahl von Lichtbändern (4) verwendet wird, die wiederum jeweils aus mehreren schaltbaren Beleuchtungselementen bestehen, wobei jedem Lichtband (4) jeweils ein Aktor (A) zum Ein- und Ausschalten des Lichtbandes (4) zugeordnet ist

## Claims

1. Method for controlling an escape route marking lighting (4) and/or an emergency lighting in a tunnel traveled by vehicles, using a system consisting of:
- at least two control units, namely a first control unit (SE1) and a second control unit (SE2),
- at least one actuator (A),
- at least one sensor (S),
wherein the control units (SEI, SE2) generate control data for the actuator (A) on the basis of the information from the sensor (S),
wherein the actuator (A) receives the control data of both the first control unit (SE1) and the control data of the second control unit (SE2),
wherein the actuator (A) is configured such that it decides whether it uses the control data of the first or second control unit (SE1, SE2) for the execution of its actuator function,
**characterized in that**,
a) the at least one actuator (A) is configured
a₁) for turning the escape route marking lighting (4) and/or the emergency lighting on and off
a₂) for turning on and off parts of the escape route marking lighting (4) and/or parts of the emergency lighting,
b) the at least one sensor (S) is configured
b₁) for detecting the position and/or movement of vehicles (1) or
b₂) for detecting smoke and/or fire,
c) the first control unit (SE1) is arranged in the region of the tunnel entrance and the second control unit (SE2) in the region of the tunnel exit.

2. Method according to claim 1,
**characterized in that**,
when the first control unit (SE1) fails and control data are no longer received from it, the actuator (A) automatically selects the control data of the second control unit (SE2) for the execution of the actuator function,
when the second control unit (SE2) fails and control data are no longer received from it, the actuator (A) automatically selects the control data of the first control unit (SE1) for the execution of the actuator function.

3. Method according to one of the preceding claims,
**characterized in that**,
the actuator (A) sends a synchronization signal to the two control units (SE1, SE2), whereupon the two control units (SE1, SE2) request the information of the at least one sensor (S) and send corresponding control data to the actuator (A) based on the updated sensor information.

4. Method according to one of the preceding claims,
**characterized in that**,
a plurality of light strips (4) is used as an escape route marking lighting (4), the light strips in turn each consist of multiple switchable lighting elements, wherein an actuator (A) for switching the light strip (4) on and off is respectively assigned to each light strip (4).

## Revendications

1. Procédé pour la commande d'un éclairage de marquage de chemin d'évacuation (4) et/ou d'un éclairage d'urgence dans un tunnel emprunté par des véhicules en utilisant un système se composant :
- d'au moins deux unités de commande, à savoir une première unité de commande (SE1) et une deuxième unité de commande (SE2),
- d'au moins un actionneur (A),
- d'au moins un capteur (S),
dans lequel les unités de commande (SE1, SE2) génèrent, à l'aide de l'information du capteur (S), des données de commande pour l'actionneur (A),
dans lequel l'actionneur (A) réceptionne les données de commande de la première unité de commande (SE1) tout comme également les données de commande de la deuxième unité de commande (SE2),
dans lequel l'actionneur (A) est réalisé de manière à ce que celui-ci décide lui-même si, pour l'exécution de sa fonction d'actionneur, il utilise les données de commande de la première ou de la deuxième unité de commande (SE1, SE2),
**caractérisé en ce que**
a) l'au moins un actionneur (A)
a₁) est réalisé pour allumer et éteindre l'éclairage de marquage de chemin d'évacuation (4) et/ou l'éclairage d'urgence
ou
a₂) pour allumer et éteindre des parties de l'éclairage de marquage de chemin d'évacuation (4) et/ou des parties de l'éclairage d'urgence,
b) l'au moins un capteur (S)
b₁) est réalisé pour la détection de la position et/ou du déplacement de véhicules (1),
ou
b₂) pour la détection de fumée et/ou de feu,
c) la première unité de commande (SE1) est disposée dans la zone d'entrée du tunnel et la deuxième unité de commande (SE2) dans la zone de sortie du tunnel.

2. Procédé selon la revendication 1,
**caractérisé en ce que**,
lorsque la première unité de commande (SE1) tombe en panne et que plus aucune donnée de commande n'est réceptionnée de la part de celle-ci, l'actionneur (A) sélectionne automatiquement les données de commande de la deuxième unité de commande (SE2) pour l'exécution de la fonction d'actionneur,
lorsque la deuxième unité de commande (SE2) tombe en panne et que plus aucune donnée de commande n'est réceptionnée de la part de celle-ci, l'actionneur (A) sélectionne automatiquement les données de commande de la première unité de commande (SE1) pour l'exécution de la fonction d'actionneur.

3. Procédé selon l'une des revendications précédentes,
**caractérisé en ce que**
l'actionneur (A) envoie un signal de synchronisation aux deux unités de commande (SE1, SE2), suite à quoi les deux unités de commande (SE1, SE2) interrogent l'information de l'au moins un capteur (S) et envoient, à l'aide de l'information de capteur actualisée, des données de commande correspondantes à l'actionneur (A).

4. Procédé selon l'une des revendications précédentes,
**caractérisé en ce que**
en guise d'éclairage de marquage de chemin d'évacuation (4), on utilise une pluralité de bandes lumineuses (4), lesquelles se composent respectivement quant à elles de plusieurs éléments d'éclairage commutables, dans lequel on associe à chaque bande lumineuse (4) respectivement un actionneur (A) pour allumer et éteindre la bande lumineuse (4).
